**Europäisches Patentamt**

(19) **European Patent Office**

**Office européen des brevets**

(11) Numéro de publication: **0 251 846**
**B1**

(12) **FASCICULE DE BREVET EUROPEEN**

(45) Date de publication du fascicule du brevet:
21.03.90

(21) Numéro de dépôt: 87401278.4

(22) Date de dépôt: 05.06.87

(51) Int. Cl.⁴: **B23K 9/02,** B23K 9/28,
B23Q 1/16, F22B 37/00

(54) Machine de soudage à l'arc sous gaz inerte à électrode rotative et son utilisation.

(30) Priorité: 23.06.86  FR 8609030

(43) Date de publication de la demande:
07.01.88 Bulletin 88/1

(45) Mention de la délivrance du brevet:
21.03.90 Bulletin 90/12

(84) Etats contractants désignés:
BE CH DE ES GB IT LI SE

(56) Documents cités:
EP-A- 0 068 952
FR-A- 2 391 025
GB-A- 1 482 741

(73) Titulaire: **FRAMATOME, Tour Fiat 1, Place de la Coupole,
F-92400 Courbevole(FR)**

(72) Inventeur: **Gaudin, Jean-Paul, 3, rue Jacques Brel,
F-69680 Chassieu(FR)**

(74) Mandataire: **Polus, Camille et al, c/o Cabinet
Lavoix 2, Place d'Estienne d'Orves, F-75441 Paris
Cedex 09(FR)**

ACTORUM AG

# Description

L'invention concerne une machine de soudage à l'arc sous gaz inerte à électrode rotative, pour le soudage interne orbital de pièces cylindriques difficilement accessibles. L'invention s'applique en particulier au soudage de l'extrémité d'un manchon de chemisage, à l'intérieur d'un tube périphérique d'un générateur de vapeur d'un réacteur nucléaire à eau sous pression.

Les générateurs de vapeur des réacteurs nucléaires à eau sous pression comportent un faisceau de tubes dont les extrémités traversent une plaque tubulaire pour déboucher dans une boîte à eau de forme hémisphérique assurant la distribution dans les tubes d'eau sous pression venant de la cuve du réacteur, et la récupération de l'eau sous pression ayant circulé dans les tubes du faisceau.

Pendant le fonctionnement du générateur de vapeur, certains des tubes du faisceau peuvent être amenés à se fissurer, sous l'effet des contraintes mécaniques ou thermiques ou sous l'effet de la corrosion. Pour remédier à cette détérioration des tubes, on a proposé des procédés et des dispositifs permettant de réaliser leur chemisage avec un manchon introduit dans le tube, dans la zone fissurée, pour être fixé sur la paroi interne du tube, de façon résistante et étanche.

Il peut être nécessaire de terminer le chemisage par une opération de soudage de l'une des extrémités du manchon sur le tube. Cette opération de soudage est réalisée avec une machine de soudage à l'arc sous gaz inerte de type orbital comportant une électrode de tungstène fixée sur un support tubulaire qui est introduit dans le tube et le manchon de façon à présenter l'électrode dans la zone voulue et mise en rotation autour d'un axe confondu avec l'axe du tube.

Une machine de soudage de ce type est par exemple décrite dans le GB-A 1 482 741.

Une telle machine de soudage qui est mise en œuvre depuis la boîte à eau du générateur de vapeur comporte une canne de soudage dans laquelle passe le support tubulaire de l'électrode; cette canne peut être introduite dans le tube pour effectuer le soudage du manchon. La machine de soudage comporte également un ensemble de motorisation et de distribution de fluide, pour la mise en rotation du support tubulaire de l'électrode et pour son alimentation en eau de refroidissement ainsi que pour l'alimentation de la zone de soudage en gaz inerte.

Entre la canne de soudage et l'ensemble de motorisation et de distribution est intercalé un boîtier de liaison traversé par un arbre de transmission relié au dispositif de motorisation permettant l'entraînement en rotation du support de l'électrode et par différents canaux pour la circulation des fluides. Le boîtier de liaison permet également de faire passer un conducteur d'alimentation de l'électrode en courant électrique.

L'ensemble de la machine de soudage comportant la canne, le boîtier de liaison et les moyens de motorisation et de distribution présente une longueur importante qui nécessite un dégagement suffisant à l'intérieur de la boîte à eau.

Pour les tubes du générateur de vapeur situés à la partie centrale du faisceau, la hauteur de la boîte à eau est largement suffisante pour permettre de déplacer la machine de soudage à la verticale des tubes. En revanche, en ce qui concerne les tubes périphériques, la hauteur libre à la verticale de ces tubes, jusqu'à la paroi hémisphérique de la boîte à eau, peut être tout-à-fait insuffisante pour pouvoir réaliser l'engagement du support d'électrode et de la canne dans le tube et pour réaliser le soudage orbital de l'extrémité d'un manchon de réparation correspondant.

On ne connaissait pas jusqu'ici de machine ou outillage permettant de réaliser le soudage de l'extrémité d'un manchon dans un tube périphérique du générateur de vapeur.

Le but de l'invention est donc de proposer une machine de soudage à l'arc sous gaz inerte à électrode rotative, pour le soudage interne orbital de pièces cylindriques difficilement accessibles comportant, de façon connue, une canne de soudage dans laquelle passe le support tubulaire d'une électrode en tungstène, un ensemble de motorisation et de distribution de fluides et un boîtier de liaison entre la canne de soudage et l'ensemble de motorisation et de distribution comportant une enveloppe externe creuse isolée électriquement sur sa surface interne, par l'intermédiaire duquel l'électrode est mise en rotation et alimentée en courant électrique et par lequel passent le gaz inerte et l'eau de refroidissement, cette machine de soudage permettant une adaptation pour son introduction dans des pièces cylindriques difficilement accessibles telles que des tubes périphériques d'un générateur de vapeur.

Dans ce but, l'enveloppe externe du boîtier de liaison est formée de deux parties successives depuis la canne de soudage jusqu'à l'ensemble de motorisation, constituées respectivement par:

– un premier carter à l'intérieur duquel est fixé un premier palier recevant l'extrémité du support tubulaire de l'électrode,

– et un second carter à l'intérieur duquel est fixé un second palier recevant un arbre de transmission relié à l'une de ses extrémités à un ensemble moteur et à son autre extrémité au support d'électrode par deux soufflets coaxiaux flexibles permettant de transmettre un mouvement de rotation au support d'électrode et disposés l'un à l'intérieur de l'autre, l'espace interne du soufflet intérieur étant en communication avec un conduit d'alimentation en eau du support d'électrode tubulaire et avec un canal d'alimentation en eau de refroidissement ménagé dans l'arbre et l'espace annulaire entre les soufflets étant en communication avec un conduit de retour d'eau dans le support tubulaire de l'électrode et avec un canal de retour d'eau ménagé dans l'arbre de transmission,

le premier et le second carters comportant chacun une face plane qui est en contact avec la face plane correspondante de l'autre carter, pour constituer une surface d'assemblage et de glissement commune dont la normale fait un angle α aigü non nul avec l'axe du premier palier et avec l'axe du second palier qui se coupent sur la surface commune d'assemblage, les deux carters étant assemblés de façon à pouvoir tourner l'un par rapport à l'autre autour de la normale à la surface commune passant par le point d'intersection 0 des deux axes, entre des positions angulaires différentes dans lesquelles des moyens permettent de solidariser les deux carters dont les axes des paliers font ainsi un angle variable entre 0 et 2 α, le gaz inerte traversant les carters dans l'espace annulaire compris entre leur surface interne et l'arbre de transmission, le soufflet externe et le support d'électrode respectivement, l'arbre de transmission étant percé d'un canal mettant en communication un moyen d'alimentation d'argon de l'ensemble de motorisation et de distribution avec l'espace interne du second carter, à la périphérie de l'arbre de transmission.

Afin de bien faire comprendre l'invention, on va maintenant décrire, à titre d'exemple un mode de réalisation d'une machine de soudage suivant l'invention et son utilisation pour le soudage d'un mancon dans un tube de générateur de vapeur.

La figure 1 est une vue en élévation de la machine de soudage en position de travail dans la boîte à eau d'un générateur de vapeur.

La figure 2 est une vue en coupe par un plan vertical de symétrie de la partie supérieure de la machine de soudage représentée sur la figure 1.

La figure 3 est une vue partielle en coupe par un plan vertical de symétrie de la partie inférieure de la machine de soudage représentée sur la figure 1.

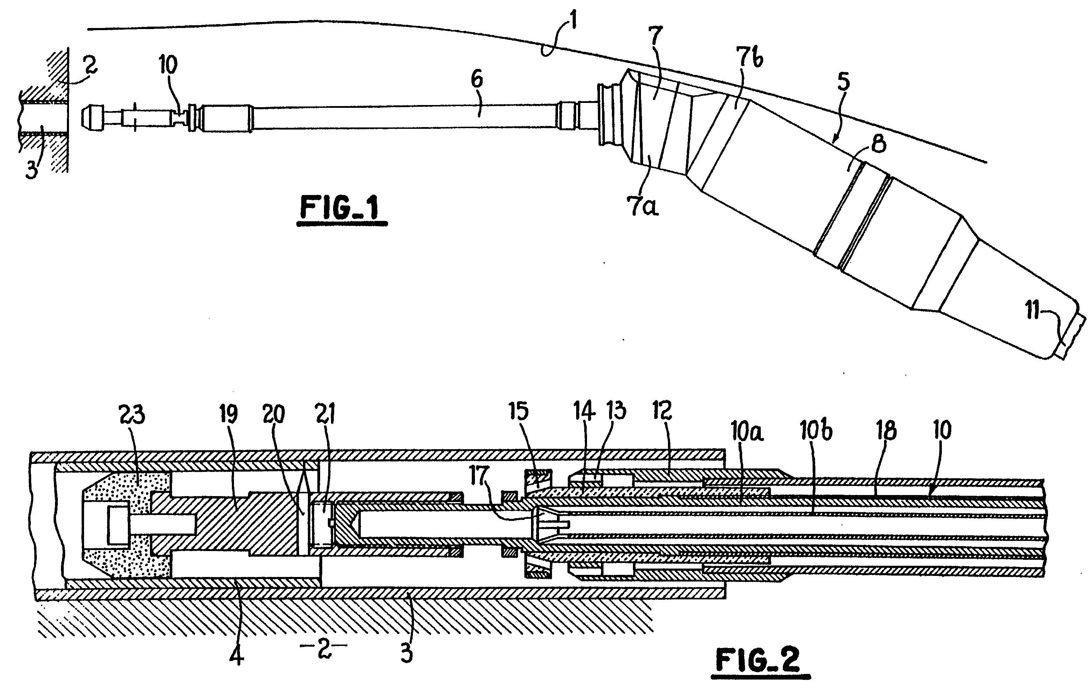

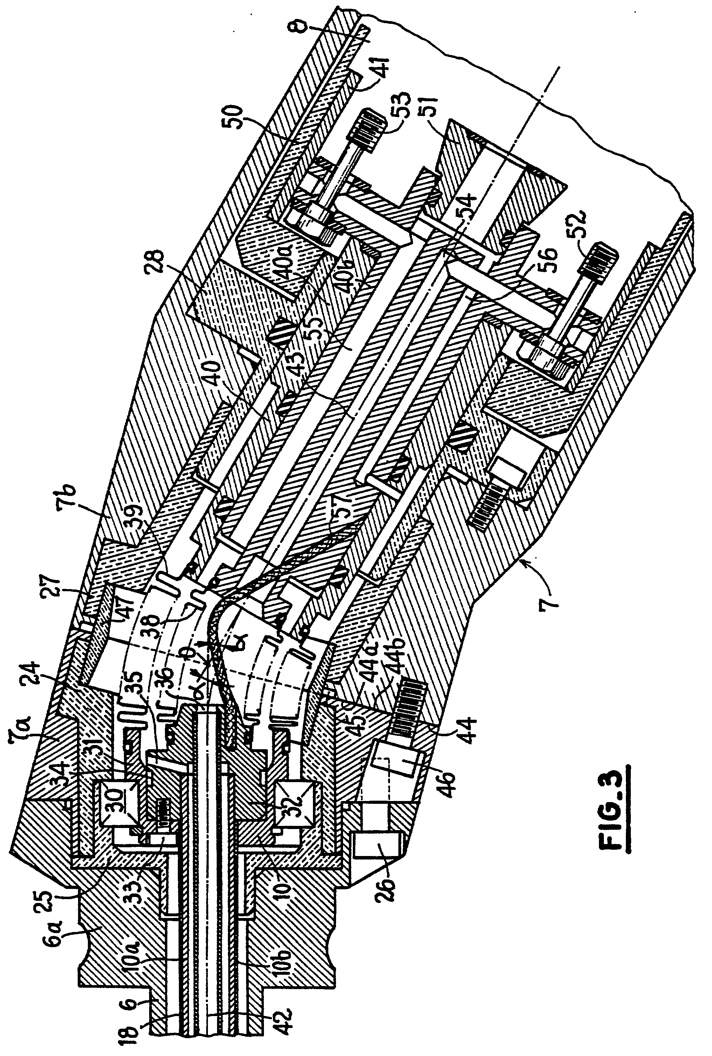

Sur la figure 1, on voit une partie de la surface intérieure 1 de forme sphérique de la boîte à eau d'un générateur de vapeur limitée à sa partie supérieure par la face inférieure d'une plaque tubulaire 2 traversée par un tube 3 dont on a représenté uniquement la partie inférieure. Le tube 3 est en cours de chemisage, un manchon 4 (visible sur la figure 2) ayant été introduit dans le tube et fixé contre sa paroi interne.

L'opération de chemisage comporte une phase finale de soudage de l'extrémité inférieure du manchon 4 sur la surface intérieure du tube 3, pour fermer, de façon totalement étanche, l'interstice qui peut subsister entre le manchon et le tube. Lors de la remise en fonctionnement du générateur de vapeur, on évite ainsi toute introduction d'eau sous pression dans l'interstice qui communique avec la fissure traversant le tube 3 et ayant nécessité le chemisage.

Cette opération de soudage du manchon est réalisée, selon l'invention, en utilisant une machine de soudage représentée sur la figure 1 et désignée de façon générale par le repère 5.

Cette machine de soudage 5 permet d'épouser au mieux la forme de la paroi intérieure 1 de la boîte à eau et de réaliser le soudage dans un tube 3 situé à la périphérie du faisceau du générateur de vapeur.

La machine de soudage 5 comporte une canne 6 traversée par le support d'électrode 10, un boîtier de liaison en deux parties 7 et un ensemble de motorisation et de distribution de fluides 8 relié à un conduit souple 11 dans lequel passent des câbles d'alimentation électrique et des conduits d'alimentation en gaz inerte et en eau.

Le carter de l'ensemble 8 renferme en particulier le moteur électrique permettant de mettre en rotation l'électrode de soudage, l'ensemble de distribution de gaz inerte et d'eau de refroidissement ainsi que l'arrivée de courant électrique d'alimentation de l'électrode de soudage.

La partie 7a du boîtier de liaison 7 constituant un premier carter, comme il sera décrit ci-après, est rigidement solidaire de la canne de soudage 6.

La seconde partie du boîtier de liaison constituant un second carter 7b est rigidement solidaire du carter de l'ensemble 8. Dans le mode de réalisation qui sera décrit en se référant à la figure 3, le carter 7b est d'une seule pièce avec le carter de l'ensemble 8.

L'alimentation en électricité et en fluide de la machine de soudage 5 se fait depuis un poste de travail situé à l'extérieur de la boîte à eau, le conduit 11 renfermant les câbles d'alimentation électrique et les conduites de fluide passant par une ouverture de visite de la boîte à eau.

La machine de soudage 5 représentée sur la figure 1 peut être utilisée par un opérateur travaillant à l'intérieur de la boîte à eau ou associée à un dispositif de manutention commandé depuis l'extérieur de la boîte à eau permettant de venir placer la machine de soudage à la verticale du tube dans lequel on réalise le soudage et de l'introduire jusqu'au moment où l'électrode de soudage se trouve dans sa zone de travail.

Sur la figure 1, la machine de soudage a été représentée avant l'introduction de la canne dans le tube 3.

Sur la figure 2, on a représenté l'extrémité de la canne 6 introduite dans le tube 3, sa partie supérieure comportant l'électrode étant elle-même à l'intérieur du manchon de chemisage 4.

La canne 6 réalisée sous forme tubulaire est solidaire, à son extrémité supérieure, d'une manchette de centrage 12 percée à son extrémité de canaux 13 en communication avec l'alésage interne de la manchette 12. Le support tubulaire 10 de l'électrode est monté à l'intérieur de la canne 6, coaxialement à celle-ci, avec interposition d'un palier de centrage 14 en un matériau isolant électrique. Le palier 14 constitue dans sa partie supérieure une collerette qui est percée de canaux 15.

Le support d'électrode 10 est constitué par deux tubes solidaires et montés coaxiaux 10a et 10b, le tube intérieur 10b étant terminé à sa partie supérieure par un distributeur 17 permettant d'assurer la circulation d'eau dans la partie supérieure du support d'électrode. Le tube externe 10a est revêtu, dans sa partie située à l'intérieur de la canne 6, par une couche de matériau isolant électrique 18, en particulier dans sa partie située à l'extérieur du palier de centrage isolant 14.

Le tube externe 10a du support d'électrode 10 est fermé à son extrémité supérieure et comporte une partie terminale saillante par rapport à la canne de soudage 6 qui est fixée par vissage dans un embout de support d'électrode 19. L'électrode en tungstène 20 est fixée par l'intermédiaire d'une vis 21 dans un logement de l'embout 19 ménagé dans une direction radiale de cet embout.

L'embout de support 19 porte à son extrémité supérieure un bouchon de céramique 23 dont le diamètre extérieur est très légèrement inférieur au diamètre intérieur du manchon 4.

Le support tubulaire d'électrode 10 est monté rotatif autour de son axe, à l'intérieur de la canne 6, grâce au palier de centrage 14 monté libre et intercalé entre le manchon de centrage 12 de la canne 6 et le tube externe 10b du support tubulaire 10.

La mise en rotation du support tubulaire 10 autour de son axe permet un balayage d'une zone circonférentielle de très faible largeur, par l'arc qui se forme entre l'extrémité de l'électrode de tungstène 20 et la surface intérieure du manchon 4, lorsque le courant électrique est envoyé sous une tension suffisante dans l'électrode 20. Le soudage est réalisé par fusion locale du manchon 4 et du tube 3.

Sur la figure 3, on voit le boîtier de liaison 7 en deux parties 7a et 7b, la partie 7a constituant un carter de forme tubulaire revêtu intérieurement par des pièces en matériau isolant électrique 24 et 25.

Le carter 7a est relié par des vis telles que 26 à une embase 6a solidaire de la partie inférieure de la canne de soudage 6. L'embase 6a constitue également un chapeau de fermeture de la partie supérieure du carter 7a assurant avec celui-ci la fixation des pièces isolantes de revêtement interne 24 et 25.

La seconde partie 7b du boîtier de liaison 7 est également réalisée sous la forme d'un carter tubulaire, ce carter 7b étant d'une seule pièce avec le boîtier de l'ensemble de motorisation 8. Le boîtier 7b est également revêtu intérieurement de pièces isolantes électriques 27 et 28.

Entre les pièces isolantes 24 et 25 du premier carter 7a est intercalé un palier 30 constitué par un roulement dont la bague externe est fixée par serrage entre les pièces isolantes 24 et 25. La bague interne du roulement 30 est solidaire d'un manchon 31 dans l'alésage interne duquel est fixée une pièce 32, par l'intermédiaire de vis telles que 33. Un joint 34 permet de réaliser l'étanchéité entre les pièces 31 et 32.

L'extrémité inférieure du support tubulaire d'électrode 10 est fixée rigidement dans la pièce 32, si bien que l'ensemble constitué par les pièces 31, 32 et le support tubulaire 10 est monté rotatif autour de l'axe du palier 30 qui est confondu avec l'axe du support tubulaire 10 et du tube 3 en cours de chemisage. La pièce 32 est percée d'un ou plusieurs canaux 35 mettant en communication l'espace annulaire compris entre les tubes 10a et 10b avec un espace compris entre les pièces 31 et 32 et situé en-dessous de ces pièces. La pièce 32 est également percée d'un trou 36 dans le prolongement du tube 10b mettant en communication l'intérieur de ce tube avec l'espace situé sous la pièce 32.

Un soufflet métallique 38 est fixé à la périphérie de la partie inférieure de la pièce 32 de façon étanche et un soufflet métallique 39 est fixé, également de façon étanche, à la périphérie de la partie inférieure de la pièce 31.

L'espace annulaire entre les tubes 10a et 10b du support tubulaire 10 est donc mis en communication avec l'espace situé entre les soufflets, cependant que l'espace intérieur du tube interne 10b est mis en communication avec l'intérieur du soufflet 38.

La pièce isolante 28 du second carter 7b constitue un palier lisse pour un ensemble 40 mobile en rotation à l'intérieur du carter 7b et solidaire d'un ensemble 41 monté mobile en rotation dans le carter de l'ensemble 8.

L'ensemble mobile 41 est solidaire du rotor du moteur électrique constituant le dispositif de motorisation de l'ensemble 8.

L'ensemble 40 constitue un arbre de transmission de la rotation du moteur, au support d'électrode 10, sa partie supérieure étant reliée à la partie inférieure des soufflets métalliques 38 et 39. L'axe 42 du palier 30 correspondant à l'axe du support tubulaire 10 et du tube 3 et l'axe 43 du palier 28 correspondant également à l'axe de rotation du moteur d'entraînement sont concourants en un point 0 situé sur la surface de jonction 44 plane, entre les carters 7a et 7b. Les carters 7a et 7b comportent en effet deux faces terminales planes 44a et 44b respectivement qui viennent en contact plan sur plan lors de la mise en place du carter 7a sur le carter 7b. La surface plane 44 comporte un très léger décrochement cylindrique 45 permettant une mise en place parfaite et un centrage des carters 7a et 7b l'un par rapport à l'autre.

Les carters 7a et 7b comportent des trous dans des positions correspondantes dans lesquels on peut introduire des vis de fixation telles que 46 pour le maintien en place des deux parties du carter.

Entre les pièces isolantes électriques 24 et 27 est également intercalée une pièce isolante électrique 47 de forme annulaire et disposée autour des soufflets métalliques 38 et 39.

L'axe 42 du palier du carter 7a et l'axe 43 du palier 28 du carter 7b font l'un et l'autre un angle de 30° avec la normale en 0 au plan 44.

Il est bien évident que les deux demi-carters peuvent être orientés l'un par rapport à l'autre en faisant tourner le premier carter 7a autour de la normale en 0 au plan 44, le déplacement se faisant par glissement plan sur plan de la face 44a sur la face 44b et par rotation du prolongement cylindrique 45 du carter 7a dans le décrochement correspondant du carter 7b.

On peut ainsi faire varier le désalignement des axes 42 et 43 entre 0 et 60°. Pendant la rotation relative des deux carters, ces axes se déplacent en effet sur deux surfaces côniques ayant un sommet 0 commun et un demi-angle au sommet de 30°.

De façon plus générale, si les axes 42 et 43 font un angle $\alpha$ avec la normale en 0 à la surface plane 44, le désalignement des axes 42 et 43 pourra varier entre la valeur nulle et une valeur égale à 2 $\alpha$.

Suivant la position du tube dans lequel on vient réaliser l'opération finale du manchonnage grâce à la machine de soudage suivant l'invention, on réglera le désalignement des deux carters à une valeur permettant l'introduction de la canne de soudage 6 dans le tube 3, comme représenté sur la figure 1.

L'ensemble rotatif 40 monté dans le palier 28 et constituant l'arbre de transmission du mouvement de rotation au support d'électrode comporte deux parties 40a et 40b coaxiales et montées étanches l'une sur l'autre grâce à des joints d'étanchéité. La partie externe 40a est fixée au soufflet externe 38, à sa partie supérieure et la partie interne 40b au soufflet interne 39. La partie interne 40b est solidaire, à sa partie inférieure, de l'ensemble rotatif 41 monté dans le carter 8 et solidaire du moteur. Cet ensemble 41 comporte en particulier une chemise isolante 50, une pièce de liaison au moteur 51 et des ajutages 52 et 53 assurant, respectivement, l'arrivée d'eau de refroidissement dans la tête de soudage et le retour de cette eau de refroidissement.

La pièce de liaison 51 assure de plus l'arrivée de gaz inerte dans la tête de soudage. La distribution d'eau et de gaz inerte est effectuée par l'arbre de transmission 40 qui est percé de canaux adéquats. L'ajutage d'arrivée d'eau de refroidissement 52 est en communication avec un canal central 54 dans la pièce 40b qui débouche dans l'espace limité par le soufflet interne 38 de liaison au support d'électrode.

L'arrivée d'eau dans le support d'électrode se fait donc par le tube interne 10b dont l'extrémité supérieure se trouve immédiatement en-dessous de l'électrode 20 et de sa vis de fixation 21.

L'ajutage de retour d'eau 53 est en liaison avec un canal 55 percé dans la partie périphérique de la pièce 40b et débouchant entre les soufflets 38 et 39. Le retour d'eau de refroidissement se fait donc par l'espace entre les tubes 10a et 10b du support d'électrode qui est en communication avec l'espace compris entre les soufflets 38 et 39.

Dans la partie supérieure du support d'électrode, l'eau de refroidissement passe, au retour, par les fentes de la pièce de distribution 17.

Le gaz inerte, généralement de l'argon, arrive par un canal central de la pièce de liaison 51 qui est fixée de façon étanche sous la partie inférieure de la partie 40b de l'ensemble 40. Ce canal est mis en communication, sous la pièce 40b, avec un canal 56 débouchant à sa partie supérieure dans l'espace périphérique autour de l'arbre de transmission 40 qui est en communication avec l'espace ménagé entre le support d'électrode 10 et la canne de soudage 6.

A la partie supérieure de la canne de soudage 6, les canaux 13 et 15 permettent de répartir l'argon dans la zone de soudage parcourue par l'électrode 20. Le bouchon de céramique 23 permet de limiter le passage de l'argon vers le haut, seule une très légère fuite périphérique permettant l'écoulement de l'argon et le balayage de la zone de soudage.

La distribution d'argon et d'eau dans le canal de la pièce 51 et dans les ajutages 52 et 53, respectivement est réalisée au niveau du rotor du moteur non représenté, à l'intérieur du carter 8.

L'arrivée du courant électrique de soudage se fait également par l'arbre de transmission 40 qui est relié par un conducteur de grande section 57, à la pièce 32 solidaire du support d'électrode 10.

L'ensemble tournant fixé à l'intérieur des carters 8, 7b et 7a et à l'intérieur de la canne de soudage 6, cet ensemble étant parcouru par le courant électrique de soudage, est entouré sur toute sa longueur par des pièces isolantes 50, 28, 27, 47, 24, 25 et par la couche isolante 18. Aucun arc ne peut donc se former entre l'ensemble mobile et le carter de la machine de soudage.

Le mouvement de rotation peut être transmis depuis l'ensemble 41 et l'arbre de transmission 40, au support d'électrode 10, malgré le désalignement des axes 43 et 42, grâce aux soufflets déformables en flexion 38 et 39.

Pour la mise en œuvre de la machine de soudage selon l'invention dans un tube périphérique d'un générateur de vapeur, on prédétermine l'orientation nécessaire entre les carters 7a et 7b, pour accéder à ce tube, c'est-à-dire pour présenter la canne de soudage 6 en position verticale, dans le prolongement de l'axe du tube. On réalise cette orientation choisie en faisant tourner le carter 7a par rapport au carter 7b autour de la normale en 0, puis on fixe les deux carters l'un par rapport à l'autre grâce aux vis 46.

La machine de soudage est ensuite introduite dans la boîte à eau du générateur de vapeur, mise en place à la verticale du tube, puis la canne de soudage est introduite à la hauteur voulue dans le tube.

On commande les alimentations voulues en fluide et en courant électrique et la mise en rotation de l'électrode depuis l'extérieur de la boîte à eau. L'opération de soudage est ainsi réalisée sans difficulté même pour les tubes périphériques.

On peut imaginer des carters dont les axes des paliers font un angle différent de 30° avec la normale à leur surface plane commune d'assemblage et de glissement. Cet angle sera déterminé par les conditions géométriques limitant l'accessibilité des tubes ou autres pièces cylindriques à l'intérieur desquels on effectue le soudage.

L'invention peut s'appliquer à toute machine de soudage orbital de pièces cylindriques creuses difficilement accessibles.

**Revendications**

1. Machine de soudage à l'arc sous gaz inerte à électrode rotative, pour le soudage interne orbital de pièces cylindriques creuses difficilement accessibles comportant, de façon connue, une canne de soudage (6) dans laquelle passe le support tubulaire (10) d'une électrode (20) en tungstène, un ensemble de motorisation et de distribution de fluide (8) et un boîtier de liaison (7) entre la canne de soudage (6) et l'ensemble de motorisation et de distribution (8) comportant une enveloppe externe creuse isolée électriquement sur sa surface interne, par l'intermédiaire duquel l'électrode (20) est mise en rotation et alimentée en courant électrique et par lequel passent le gaz inerte et l'eau de refroidissement, caractérisée par le fait que l'enveloppe externe du boîtier de liaison (7) est formée de deux parties successives (7a, 7b) depuis la canne de soudage (6) jusqu'à l'ensemble de motorisation (8), constituées respectivement par:
   – un premier carter (7a) à l'intérieur duquel est fixé un premier palier (30) recevant l'extrémité du support tubulaire (10) de l'électrode (20),

– et un second carter (7b) à l'intérieur duquel est fixé un second palier (28) recevant un arbre de transmission (40) relié à l'une de ses extrémités à un ensemble moteur (41) et à son autre extrémité au support d'électrode (10) par deux soufflets coaxiaux (38, 39) flexibles permettant de transmettre un mouvement de rotation au support d'électrode et disposés l'un à l'intérieur de l'autre, l'espace interne du soufflet intérieur étant en commmunication avec un conduit d'alimentation en eau (10b) du support d'électrode tubulaire (10) et avec un canal d'alimentation en eau de refroidissement (54) ménagé dans l'arbre (40) et l'espace annulaire entre les soufflets (38) et (39) étant en communication avec un conduit de retour d'eau dans le support tubulaire (10) de l'électrode (20) et avec un canal (55) de retour d'eau ménagé dans l'arbre de transmission (40), le premier et le second carters (7a, 7b) comportant chacun une face plane (44a, 44b) qui est en contact avec la face plane correspondante de l'autre carter, pour constituer une surface d'assemblage et de glissement commune 44) dont la normale fait un angle aigü non nul avec l'axe (42) du premier palier (30) et avec l'axe (43) du second palier (28) qui se coupent sur la surface commune d'assemblage (44), les deux carters (7a, 7b) étant assemblés de façon à pouvoir tourner l'un par rapport à l'autre autour de la normale à la surface commune (44) passant par le point d'intersection 0 des deux axes (42) et (43), entre des positions angulaires différentes dans lesquelles des moyens (46) permettent de solidariser les deux carters (7a, 7b) dont les axes (42, 43) des paliers (30, 28) font ainsi un angle variable entre 0 et 2 α, le gaz inerte traversant les carters (7a, 7b) dans l'espace annulaire compris entre leur surface interne et l'arbre de transmission (40), le soufflet externe (38) et le support d'électrode (10) respectivement, l'arbre de transmission (40) étant percé d'un canal (56) mettant en communication un moyen d'alimentation d'argon (51) de l'ensemble de motorisation et de distribution (8) avec l'espace interne du second carter (7b), à la périphérie de l'arbre de transmission (40).

2. Machine de soudage suivant la revendication 1, caractérisée par le fait que le support tubulaire d'électrode (10) est constitué par deux tubes coaxiaux (10a, 10b) montés l'un à l'intérieur de l'autre.

3. Machine de soudage suivant l'une quelconque des revendications 1 et 2, caractérisée par le fait que l'angle α des axes (42, 43) des paliers (30, 28) des carters (7a, 7b) avec la normale à la surface plane (44) d'assemblage et de glissement est sensiblement égal à 30°.

**Patentansprüche**

1. Maschine zum Lichtbogenschweißen unter inertem Gas mit drehender Elektrode, für die orbitale Innenschweißung von zylindrischen hohlen Teilen, die schlecht zugänglich sind, mit, in bekannter Weise, einem Schweißrohr (6) durch das sich der rohrförmige Träger (10) einer Wolframelektrode (20) sich erstreckt, einer Anordnung des Antriebs und der Flüssigkeitsverteilung (8) und einem Verbindungsgehäuse (7) zwischen dem Schweißrohr (6) und der Antriebs- und Verteilanordnung (8), die eine hohle äußere Hülle aufweist, die auf ihrer Innenfläche elektrisch isoliert ist, wobei mittels dieser die Elektrode (20) in Drehung versetzt und mit Strom versorgt wird und durch die das inerte Gas und das Kühlwasser hindurchtreten, dadurch gekennzeichnet, daß die äußere Hülle des Verbindungsgehäuses (7) aus zwei aufeinanderfolgenden Bereichen (7a, 7b) von dem Schweißrohr (6) aus bis zur Antriebsanordnung (8) gebildet ist, entsprechend gebildet aus:

– einem ersten Gehäuse (7a) in dessen Inneren ein erstes Lager (30) befestigt ist, das das Ende des rohrförmigen Trägers (10) der Elektrode (20) aufnimmt,

– und einem zweiten Gehäuse (7b) im Inneren dessen ein zweites Lager (28) befestigt ist, das eine Antriebswelle (40) aufnimmt, die an einem ihrer Enden mit einer Motoranordnung (41) und an ihrem anderen Ende mit dem Träger der Elektrode (10) durch zwei flexible koaxiale Gebläse (38, 39) verbunden ist, die erlauben, ein Drehmoment auf den Elektrodenträger zu übertragen, wobei das eine im Inneren des anderen angeordnet ist, der innere Raum des inneren Gebläses in Verbindung steht mit einer Wasserzuführleitung (10b) des rohrförmigen Elektrodenträgers (10) und mit einem Kühlwasserzuführkanal (54), der in der Welle (40) und dem ringförmigen Raum zwischen den Gebläsen (38) und (39) in Verbindung steht mit einem Wasserrückführkanal in den rohrförmigen Träger (10) der Elektrode (20) und mit einem Wasserrückführkanal (55), der in der Getriebewelle (40) angeordnet ist,

wobei das erste und zweite Gehäuse (7a, 7b) jeweils eine ebene Seite (44a, 44b) aufweisen, die in Verbindung ist mit der entsprechenden ebenen Seite des anderen Gehäuses, um eine gemeinsame Anordnungs- und Gleitfläche (44) zu bilden, deren Senkrechte einen spitzen Winkel mit der Achse (42) des ersten Lagers (30) und mit der Achse (43) des zweiten Lagers (28) einschließt, der nicht Null ist, die sich auf der gemeinsamen Anordnungsfläche (44) schneiden, wobei die beiden Gehäuse (7a, 7b) derart zusammengefügt sind, um einander gegenüber um die Senkrechte zur gemeinsamen Fläche (44) drehen zu können, die durch den Schnittpunkt 0 der beiden Achsen (42) und (43) hindurchgeht, zwischen unterschiedlichen Winkelstellungen, in denen Einrichtungen (46) erlauben, die beiden Gehäuse (7a, 7b) zu verbinden, von denen die Achsen (42, 43) der Lager (30, 28) so einen unterschiedlichen Winkel zwischen 0 und 2 α bilden, wobei das inerte Gas, das die Gehäuse (7a, 7b) in dem ringförmigen Raum durchströmt, der zwischen deren innerer Fläche und der Getriebewelle (40), dem äußeren Gebläse (38) bzw. dem Elektrodenträger (10) vorhanden ist, wobei die Getriebewelle (40) von einem Kanal (56) durchsetzt ist, der eine Argonzuführeinrichtung (51) der Antriebs- und Verteilanordnung (8) mit dem inneren Raum des zweiten Gehäuses (7b) am Umfang der Getriebewelle (40) in Verbindung setzt.

2. Schweißmaschine nach Anspruch 1, dadurch gekennzeichnet, daß der rohrförmige Elektrodenträger (10) aus zwei axialen Rohren (10a, 10b) gebildet ist, von denen eines im Inneren des anderen angeordnet ist.

3. Schweißmaschine nach Anspruch 1 oder 2, dadurch gekennzeichnet, daß der Winkel α der Achsen (42, 43) der Lager (30, 28) der Gehäuse (7a, 7b) mit der Senkrechten zur ebenen Oberfläche (44) der Zusammenführung und des Gleitens im wesentlichen gleich 30° beträgt.

**Claims**

1. Inert-gas-arc welding machine with rotary electrode for the orbital internal welding of hollow cylindrical parts which are accessible only with difficulty, comprising, in a known manner, a welding sheath (6) through which the tubular support (10) for the tungsten electrode (20) passes, a motorization and fluid distribution assembly (8) and a connecting body (7) between the welding sheath (6) and the motorization and distribution assembly (8) comprising a hollow outer housing, electrically insulated on its inner surface, via which housing the electrode (20) is rotated and supplied with electric current and through which housing the inert gas and the cooling water pass, characterized in that the outer housing of the connecting body (7) is composed of two parts (7a, 7b) in series extending from the welding sheath (6) to the motorization assembly (8), comprising respectively:

a first casing (7a), inside which is fixed a first bearing (30) which receives the end of the tubular support (10) for the electrode (20),

and a second casing (7b), inside which is fixed a second bearing (28) which receives a transmission shaft (40), connected at one of its ends to a motor assembly (41), and at its other end to the electrode support (10) by means of two flexible, coaxial bellows (38, 39) which enable the transmission of a rotary movement to the electrode support and which are arranged one inside the other, the internal space of the inner bellow being in communication with a water supply pipe (10b) in the tubular electrode support (10) and with a cooling water supply channel (54) provided in the shaft (40), and the annular space between the bellows (38) and (39) being in communication with a water return pipe in the tubular support (10) for the electrode (20) and with a water return channel (55) provided in the transmission shaft (40), the first and the second casing (7a, 7b) each incorporating a plane face (44a, 44b) which is in contact with the corresponding plane face of the other casing to from a common assembly and sliding surface (44), the perpendicular to said surface forming an acute angle, which is not zero, with the axis (42) of the first bearing (30) and with the axis (43) of the second bearing (28) which intersect on the common assembly surface (44), the two casings (7a, 7b) being assembled so as to be able to rotate relative to each other about the perpendicular to the common surface (44) passing through the point of intersection 0 of the two axes (42) and (43), between different angular positions in which means (46) enable the two casings (7a, 7b) to be fixedly connected, the axes (42, 43) of the bearings (30, 28) in the casings thus forming a variable angle between 0 and 2 α, the inert gas passing through the casings (7a, 7b) in the annular space provided between the inner surface thereof and the transmission shaft (40), the outer bellow (38) and the electrode support respectively, the transmission shaft being pierced with a channel (56) which connects a means of supplying argon (51) from the motorization and distribution assembly (8) with the internal space of the second casing (7b), at the periphery of the transmission shaft (40).

2. Welding machine according to claim 1, characterized in that the tubular electrode support (10) comprises two coaxial tubes (10a, 10b) mounted one inside the other.

3. Welding machine according to either claim 1 or 2, characterized in that the angle α of the axes (42, 43) of the bearings (30, 28) in the casings (7a, 7b) with the perpendicular to the flat assembly and sliding surface (44) is substantially equal to 30°.

**FIG_1**

**FIG_2**

FIG.3